# EUROPÄISCHE PATENTSCHRIFT

(11) **EP 0 463 122 B1**
(45) Veröffentlichungstag und Bekanntmachung des Hinweises auf die Patenterteilung: **12.04.1995**
(21) Anmeldenummer: 90913691.3
(22) Anmeldetag: 04.10.1990
(51) Int. Cl.: B29C 53/76

(54) **VERFAHREN UND VORRICHTUNG SOWIE WICKELKERN ZUM HERSTELLEN VON VERBINDUNGSTEILEN AUS FASERARMIERTEM KUNSTSTOFF**
PROCESS AND DEVICE PLUS WINDER CORE FOR THE PRODUCTION OF PIPE FITTINGS MADE OF FIBRE-REINFORCED PLASTIC
PROCEDE, DISPOSITIF ET AXE D'ENROULEMENT POUR FABRIQUER DES RACCORDS EN MATIERES PLASTIQUES RENFORCEES PAR DES FIBRES

(30) Priorität: 04.10.1989 US 417117
(43) Veröffentlichungstag der Anmeldung: 02.01.1992
(73) Patentinhaber: Arundo Technology AG, 9400 Rorschach (CH)
(72) Erfinder: LONA, Norbert, CH-9400 Rorschacherberg (CH)
(74) Vertreter: Münch, Otto
(86) Internationale Anmeldenummer: CH9000235
(87) Internationale Veröffentlichungsnummer: WO9104843

(56) Entgegenhaltungen:
- CH-A- 479 019
- DE-A- 2 012 112
- FR-A- 1 150 700
- FR-A- 2 133 232
- GB-A- 1 000 375
- GB-A- 2 147 561
- US-A- 2 878 038
- US-A- 3 988 103
- US-A- 4 750 960
- Research Disclosure, März 1982, Industrial Opportunities Ltd, (Homewell, Havant, Hampshire, GB), G. Heidemann: "GRP filament wound T-pieces", siehe Seite 60, Zusammenfassung Nr. 21507
- Plastverarbeiter, Nr. 8, Band 35, August 1984, (Speyer, DE), H. Cherek: "Fortschritte in der Fertigung von Wickel- und Pressteilen", Seiten 56,59-62,64, siehe Seiten 56,59

## Beschreibung

Faserarmierte Kunststoffrohre werden häufig durch Klebefittings aus faserarmiertem Kunststoff miteinander verbunden. Bei Rohrinstallationen ist meist eine grosse Anzahl solcher Fittings, z.B. Bogen, T- oder Kreuzfittings, erforderlich. Man rechnet im Durchschnitt mit etwa einem Fitting pro Meter Rohr.

Aus "Research-Disclosure", März 1982, Seite 60 ist eine Vorrichtung zum Wickeln von T-Stücken aus faserarmiertem Kunststoff bekannt. Ein Wickelkern wird am Arm eines Roboters befestigt. Ein Drehtisch mit Rowing-Spulen rotiert horizontal um den Wickelkern herum. Der Roboter wird programmgesteuert bewegt.

Ein ähnlicher Vorschlag, allerdings ohne Drehtisch, ist in einem Artikel in "Plastverarbeiter", August 1984, Nr. 8, Speyer, Deutschland, Seiten 56-64 enthalten.

Bei solchen Wickelvorrichtungen wurden bisher jeweils die ersten paar Windungen von Hand auf den Wickelkern aufgewickelt und am Ende des Wickelvorgangs wurden die Rowings ebenfalls von Hand abgeschnitten.

Der vorliegenden Erfindung liegt die Aufgabe zugrunde, ein Wickelverfahren und eine Wickelvorrichtung der eingangs genannten Art derart weiterzubilden, dass keine manuellen Eingriffe nötig sind. Diese Aufgabe wird durch die Merkmalskombination der Ansprüche 1 und 3 gelöst.

Nachfolgend werden Ausführungsbeispiele der Erfindung anhand der Zeichnung erläutert. Darin zeigt:
- Fig. 1: die Herstellung eines Kern,
- Fig. 2: das Aufgiessen eines Innengelcoats,
- Fig. 3: einen Axialschnitt durch eine Wickelstation,
- Fig. 4: eine Draufsicht auf die Station nach Fig. 3
- Fig. 5: einen Schnitt durch eine Tränkstation,
- Fig. 6: ein Detail des Faserbandaustritts der Wickelstation,
- Fig. 7: eine schematische Darstellung einer Spickelauflagestelle,
- Fig. 8: die Herstellung des Aussengelcoats, und
- Fig. 9: einen Kern zur Herstellung eines Bogenfittings.

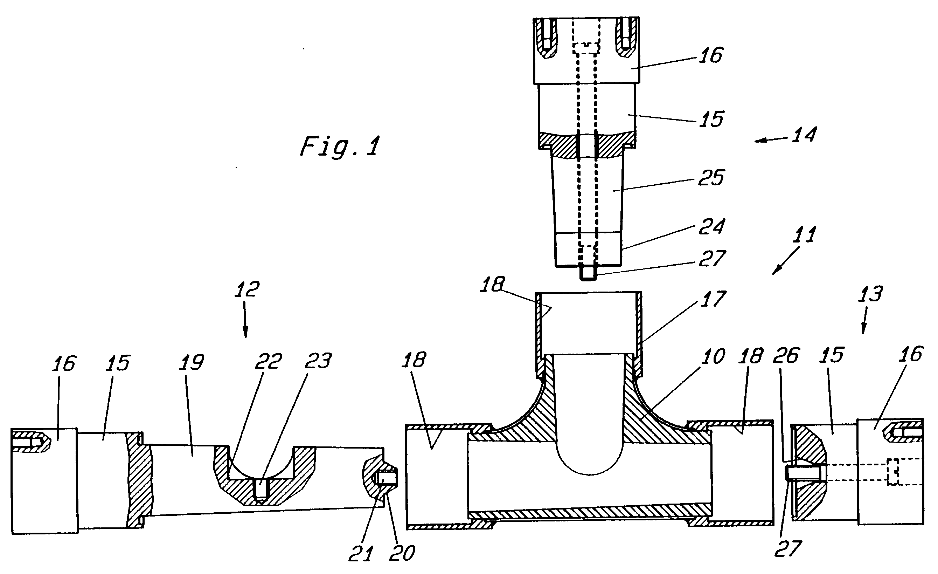

In Fig. 1 ist die Herstellung eines Hohlkörpers 10 als Bestandteil eines Kerns 11 dargestellt. Der Kern 11 besteht aus drei starren, z.B. metallenen, zusammenfügbaren Kernteilen 12, 13, 14 und bestimmt die Innenform eines herzustellenden T-Fittings. Jedes der Kernteile 12, 13, 14 hat einen zylindrischen Ansatz 15, der die Innenform der entsprechenden Klebemuffe des Fittings bestimmt, und einen an den Ansatz 15 nach aussen anschliessenden Einspannabschnitt 16. Zumindest die Ansätze 15 sind mit einem Antihaftbelag, z.B. mit PTFE, beschichtet. Die drei Kernteile 12, 13, 14 werden in einer Giessform 17 so zusammengebaut, dass die zylindrischen Ansätze 15 je in einer zylindrischen Bohrung 18 zentriert sind. Die Innenform der Giessform 17 entspricht der Innenform des herzustellenden T-Fittings. Beim Kernteil 12 schliesst an den zylindrischen Ansatz 15 ein gegen das freie Ende zu konisch verjüngter Abschnitt 19 mit einem koaxialen Zentrierkonus 20 am freien Ende und einer axialen Gewindebohrung 21 an. In der Mitte hat der Abschnitt 19 eine querverlaufende zylindrische Ansenkung 22 mit einer zentrischen Gewindebohrung 23. In der Ansenkung 22 ist im montierten Zustand ein zylindrischer Ansatz 24 am freien Ende des Kernteils 14 zentriert. Das Kernteil 14 hat zwischen den zylindrischen Ansätzen 15, 24 einen konisch verjüngten Abschnitt 25. Das Kernteil 13 ist mit einer konischen Ansenkung 26 auf dem Zentrierkonus 20 koaxial zum konischen Teil 12 zentriert. Die drei Kernteile 12, 13, 14 werden durch Schrauben 27 in der Giessform 17 zusammengespannt. Nun wird der die konischen Abschnitte 19, 25 rings umgebende Hohlraum mit einer flüssigen Silikongummimasse ausgegossen. Nach dem Abbinden dieser Masse werden die Schrauben 27 gelöst und die Kernteile 12, 13, 14 aus der Giessform 17 entfernt, wobei zum leichteren Entformen noch Druckluft eingeblasen werden kann. Der Hohlkörper 10 wird aus der Giessform 17 zweckmässig ebenfalls mit Druckluft gelöst und entfernt. Anschliessend wird der Kern 11, bestehend aus den Kernteilen 12, 13, 14 und dem Hohlkörper 10 wieder zusammengebaut.

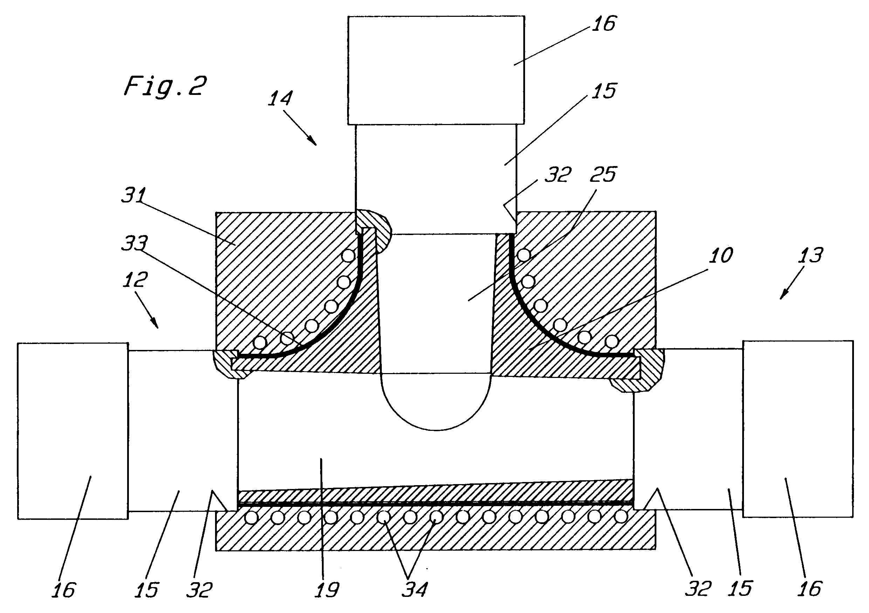

Zur Herstellung eines Klebefittings wird der Kern 11 nach Fig. 2 zunächst in eine zweiteilige Giessform 30 eingesetzt und mit den drei zylindrischen Ansätzen 15 in bündig angepassten zylindrischen Bohrungen 32 zentriert. Die Giessform 31 umschliesst den Hohlkörper 10 allseitig mit Spiel. In diesen Zwischenraum zwischen Giessform 31 und Hohlkörper 10 wird ein flüssiger Innengelcoat, z.B. ein Duroplast mit hohem Weichmacheranteil, eingegossen. Der Innengelcoat bildet beim fertigen Fitting eine faserarme Harzschicht zur Verbesserung der Korrosionsfestigkeit. Die Giessform wird zur Aushärtung des so gebildeten Innengelcoats 33 erwärmt, z.B. indem durch eine in der Giessform 31 eingeformte Rohrschlange 34 Heisswasser durchgeleitet wird. Nach dem Aushärten des Innengelcoats 33 wird die Giessform 31 z.B. mit Kaltwasser abgekühlt, die Giessform 31 geöffnet und der Kern 11 mit dem Innengelcoat 33 entnommen. Dieser erstreckt sich nur zwischen den zylindrischen Achsenansätzen 15 und nur über den Hohlkörper 10. Die um die Ansätze 15 später aufgebrachten Klebemuffen haben also keinen Innengelcoat.

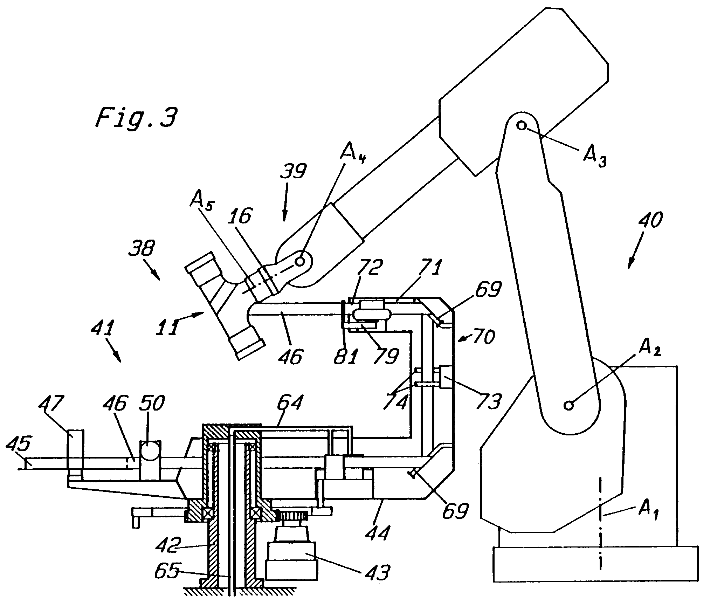

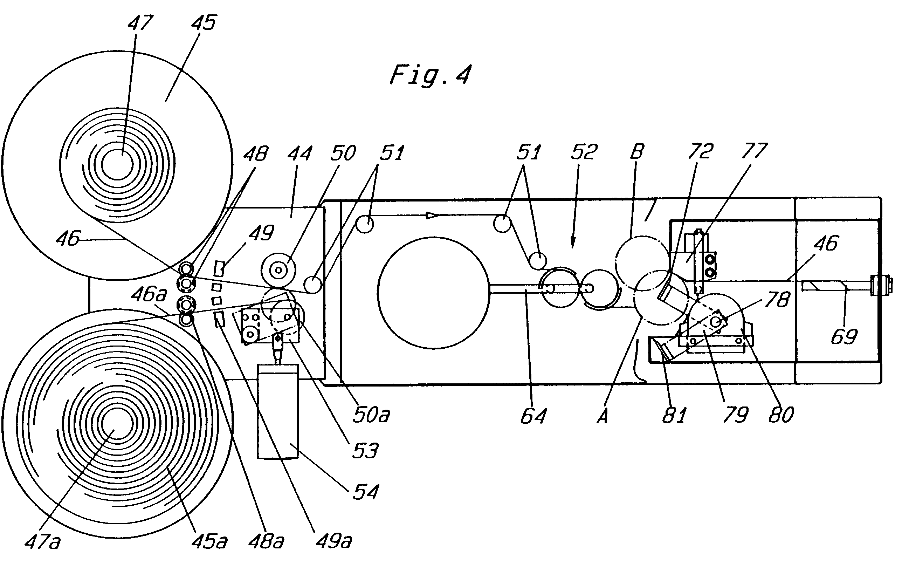

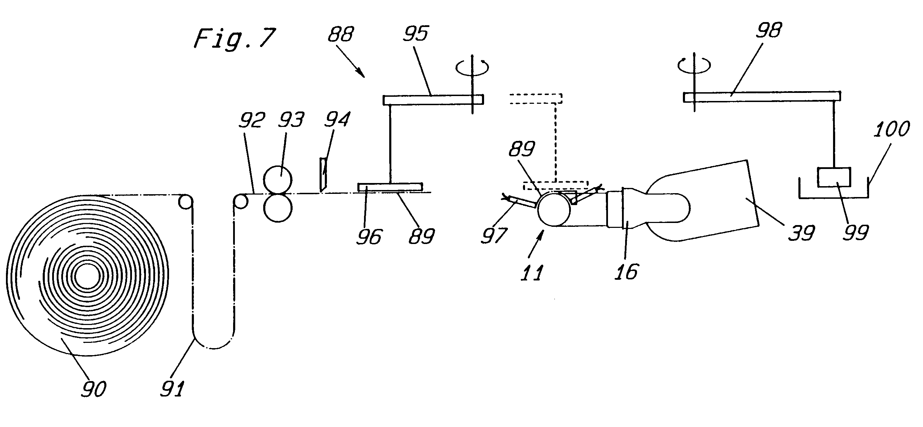

Nun wird der Kern 11 in einer Wickelstation 38 mit dem Einspannabschnitt 16 des Kernteils 14 am Kopf 39 eines Sechs-Achsen-Roboters 40 eingespannt. Der Kern 11 ist durch den Roboter 40 zwischen einem Haspel 41 (Fig. 3 und 4) und einer Spickelauflagestelle (Fig. 7) hin und her schwenkbar. Der in Fig. 3 und Fig. 4 dargestellte Haspel 41 ist auf einem vertikalen rohrförmigen Ständer 42 um eine vertikale Achse drehbar gelagert und wird durch einen Servomotor 43 gedreht. Auf einer horizontalen, mitdrehenden Platte 44 ist eine Vorratsrolle 45 mit einem z.B. gewobenen Glasfaserband 46 auf einen vertikalen Zapfen 47 aufgesteckt. Das Band 46 ist über ein Walzenpaar 48, eine Lichtschranke 49, eine Presswalze 50 und mehrere Umlenkwalzen 51 zu einer Tränkstation 52 geführt. Neben der Vorratsrolle 45 ist eine Reserverolle 45a mit Reserveband 46a auf einem zweiten Zapfen 47a aufgesteckt. Das Reserveband 46a ist durch ein zweites Walzenpaar 48a und eine zweite Lichtschranke 49a geführt, und das Bandende ist leicht lösbar an einer weiteren Presswalze 50a befestigt. Dem Faserband 46 zugewandt ist auf dem Ende des Bandes 46a ein doppelseitiges, trägerloses Klebband aufgebracht. Die Presswalze 50a sitzt auf einer schwenkbaren Platte 53 und kann mittels eines Pneumatikzylinders 54 gegen die Walze 50 angepresst werden. Dies geschieht, wenn von der Lichtschranke 49 das Ende des Faserbandes 46 gemeldet wird. Der Anfang des Reservebandes 46a wird daher automatisch ans Ende des Bandes 46 angeheftet. Für das Ersetzen der leeren Spule kann ein Stillstand des Haspels 41 abgewartet werden.

In der Tränkstation 52 umschlingt das Faserband 46 zwei feststehende Zylinder 58. Diese haben in ihrer Zylinderwand 59 je einen axialen Längsschlitz 60. Der Längsschlitz 60 ist oben und unten durch je eine Bride 61, 62 teilweise abgedeckt, so dass seine Länge genau der Breite des Faserbandes 46 angepasst werden kann. Eine mit dem Längsschlitz 60 kommunizierende Bohrung 63 im Zylinder 58 ist über einen Schlauch 64 mit einem zentralen Zufuhrrohr 65 für flüssigen Kunststoff, z.B. ein flüssiges Duroplast, verbunden. Das Faserband 46 bedeckt die Längsschlitze 60 der beiden Zylinder und wird durch diese mit flüssigem Kunststoff von beiden Seiten her getränkt.

Von der Tränkstation ist das getränkte Band über zwei um 45° geneigte Umlenkstäbe 69 an einem von der Platte 44 senkrecht nach oben ragenden Arm 70 geführt und um je 90° umgelenkt, so dass es längs eines radial nach innen ragenden, abgekröpften oberen Endabschnittes 71 radial nach innen über eine Austrittskante 72 geführt ist. Am Arm 70 ist zwischen den Umlenkstäben 69 eine Bandbremse, bestehend aus zwei parallelen, an einer Platte 73 starr befestigten Stäben 74 angebracht. Die Platte 73 ist zur Einstellung der Bremswirkung parallel zur Achse der Stäbe 74 schwenkbar und arretierbar.

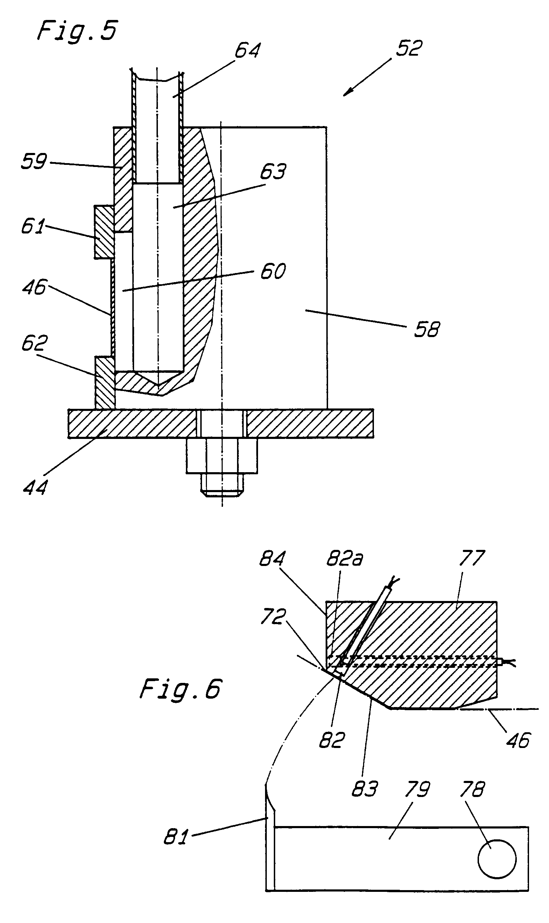

Die Austrittskante 72 ist auf einem prismatischen Körper 77 aus Kunststoff gebildet. Das Material des Körpers 77 ist so gewählt, dass der Körper 77 durch den flüssigen Kunststoff des raserbindes 46 nicht benetzt wird. Um eine parallel zur Austrittskante 72 angeordnete Achse 78 ist ein Arm 79 durch einen Motor 80 schwenkbar. Der Arm 79 trägt an seinem freien Ende ein Messer 81. Beim Betätigen des Motors 80 schlägt das Messer 81 gegen den Körper 77 und trennt das Band 46 durch. Das Bandende bleibt dabei leicht lösbar am Körper 77 angeheftet. Um dieses Bandende zu Beginn eines neuen Wickelvorganges am Kern 11 oder einer vorangegangenen Wickelschicht anheften zu können, sind im Körper 77 benachbart der Austrittskante 72 zwei Heizelemente 82 angeordnet (Fig. 6). Ueber die Heizelemente 82 kann der Kunststoff im Faserband 46 punktförmig rasch auf die zum Aushärten erforderliche Temperatur erhitzt werden. Die Heizelemente 82 sind auf einer an die Austrittskante 72 anschliessenden, gegenüber der Ebene des vom oberen Umlenkstab 69 abgezogenen Faserbandes 46 geneigten Fläche 83 angeordnet. An der anderen an die Austrittskante 72 anschliessenden Fläche 84 können weitere Heizelemente 82a angeordnet werden, um auch die Enden der Wicklung auf diese Wicklung anzuheften.

Im Betrieb wird der Kern 11 vom Roboter 40 zunächst so gegen die Fläche 83 geführt, dass der Innengelcoat gegen das Ende des Faserbandes 46 an der Stelle der Heizelemente 82 angepresst ist (Stellung A in Fig. 4). Durch Einschalten der Heizelemente 82 wird der flüssige Kunststoff des Faserbandes an dieser Stelle punktförmig ausgehärtet und damit das Bandende an den Innengelcoat angeheftet. Während des anschliessenden Wickelns wird der Haspel 41 durch den Servomotor 43 programmgesteuert gedreht und dabei gleichzeitig der Kern 11 mittels des Roboters 40 so verschoben und geneigt, dass auf den Gelcoat 33 und die drei Abschnitte 15 überlappend eine Faserbandschicht gewickelt wird. Die erste Bewegung des Roboters ist dabei radial ins Zentrum zur Drehachse des Haspels 41 gerichtet. Wenn eine Schicht gewickelt ist, fährt der Kopf 39 des Roboters 40 mit dem Kern 11 wiederum gegen die Austrittskante 72, diesmal jedoch in die Stellung B in Fig. 4. Hierauf wird durch Betätigen des Motors 80 das Messer 81 gegen die Austrittskante 72 geschlagen, so dass das Faserband 46 durchgetrennt wird. Das Bandende kann auf die gewickelte Schicht durch Einschalten der Heizelemente 82a angeheftet werden.

Beim Wickeln von Abzweigfittings wie dem dargestellten T-Fitting verbleibt jeweils an der Abzweigstelle beidseitig eine dreieckige Fläche ohne Faserbandwicklung. Auf diese Stellen wird nach jeder Wicklung in der Spickelauflagestelle 88 (Fig. 7) ein Spickel 89 aus Glasfasergewebe aufgelegt. Die Spickelauflagestelle 88 hat eine Vorratsrolle 90. Von dieser wird über eine Speicherschlaufe 91 ein Glasfasergewebeband 92 mittels eines Walzenpaares 93 intermittierend abgezogen. In einer Schneidstation 94 wird das Band 92 in die rechteckigen Spickel 89 zerschnitten. Diese werden mittels eines schwenkbaren Arms 95 und eines daran befestigten Saugtellers 96 ergriffen und angehoben. Im Schwenkbereich des Arms 95 wird der Kern 11 mittels des Kopfs 39 des Roboters 40 horizontal hingehalten. Ein zweiter Schwenkarm 98 trägt einen Tampon 99, der in einen flachen Behälter 100 mit flüssigem Kunststoff abgesenkt werden kann. Der Arm 98 wird anschliessend verschwenkt, so dass der Tampon über die durch das Glasfaserband 46 nicht bewickelte Stelle des Kerns 11 gelangt. Durch Absenken des Arms 98 wird diese Stelle mit flüssigem Kunststoff benetzt. Anschliessend wird der mit dem Teller 96 angesaugte Spickel 89 mittels des Arms 95 über den Kern 11 verschwenkt und auf die benetzte Stelle abgesenkt. Mittels vier Heizelementen 97 wird der aufgelegte Spickel 89 auf die Gewebeschicht angeheftet. Nun wird durch den Kopf 39 der Kern 11 um 180° gewendet und in gleicher Weise auf der gegenüberliegenden Seite ein zweiter Spickel 89 aufgebracht.

Auf den Kern 11 werden in dieser Weise alternierend Wicklungen aus Glasfaserband 46 und Spickel 89 aufgetragen, bis die erforderliche Materialstärke erreicht ist. Da die Bewegungen des Roboters 40 und des Haspels 41 exakt reproduzierbar programmiert werden können, wird eine grosse Konstanz der Festigkeitseigenschaften der hergestellten Fittings erreicht.

Wie aus den Figuren ersichtlich ist, benötigt der Roboter 40 mindestens vier Freiheitsgrade: Der Kopf 39 muss nämlich um zwei zueinander senkrechte Achsen geschwenkt sowie parallel zur Drehachse des Haspels 41 und mindestens in einer Richtung radial dazu translatorisch verschoben werden können. Um auch die Spickelauflagestelle erreichen zu können, ist im vorliegenden Fall der Kopf 39 in zwei radialen Richtungen verschiebbar. Bei dem in Fig. 3 beispielsweise dargestellten Roboter 40 sind diese fünf Freiheitsgrade durch fünf Schwenkachsen A₁ bis A₅ realisiert.

Wenn die Fittings fertig gewickelt sind, werden sie durch den Roboter mit einem der freien Einspannabschnitte 16 auf ein Transferband aufgesteckt, das sie zum Aushärten des Kunststoffs durch einen nicht dargestellten Durchlaufofen transportiert. Nach dem Aushärten des Kunststoffs wird der Kern 11 entformt, indem die Schrauben 27 gelöst und die Kernteile 12, 13, 14 in ihrer Achsrichtung auseinandergezogen werden. Schliesslich wird der elastomere Hohlkörper 10 aus dem Fitting entfernt. Dieser Hohlkörper 10 ist mehrfach wiederverwendbar.

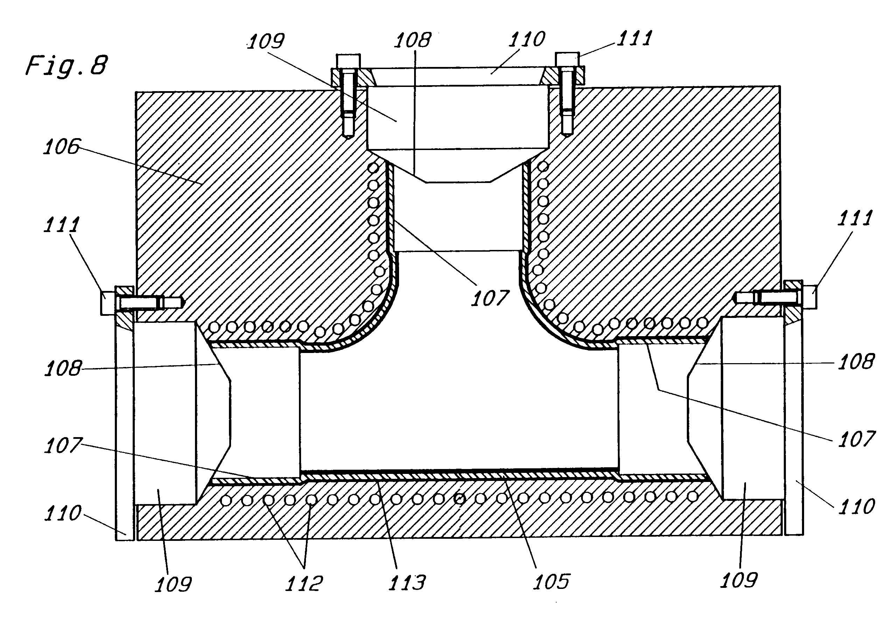

Um die Aussenfläche des so erhaltenen Fittings 105 zu schützen, wird dieser anschliessend in eine zweiteilige Giessform 106 eingespannt (Fig. 8). In der Form wird der Fitting 105 mit den drei angeformten Klebemuffen 107 auf je einem Konus 108 eines Zapfens 109 zentriert. An jedem Zapfen 109 ist ein Flansch 110 angeformt, der mit Schrauben 111 gegen die Form 106 spannbar ist. Zum Aufheizen und Abkühlen hat die Giessform 106 Rohrschlangen 112. Nun wird in den Zwischenraum zwischen der Giessform 106 und dem darin zentrierten Fitting 105 ein flüssiger Aussengelcoat 113 eingefüllt. Durch Aufheizen der Form 106 wird der Aussengelcoat 113 erhärtet. Schliesslich wird die Giessform 106 geöffnet und der fertige T-Fitting 105 aus der Form entnommen.

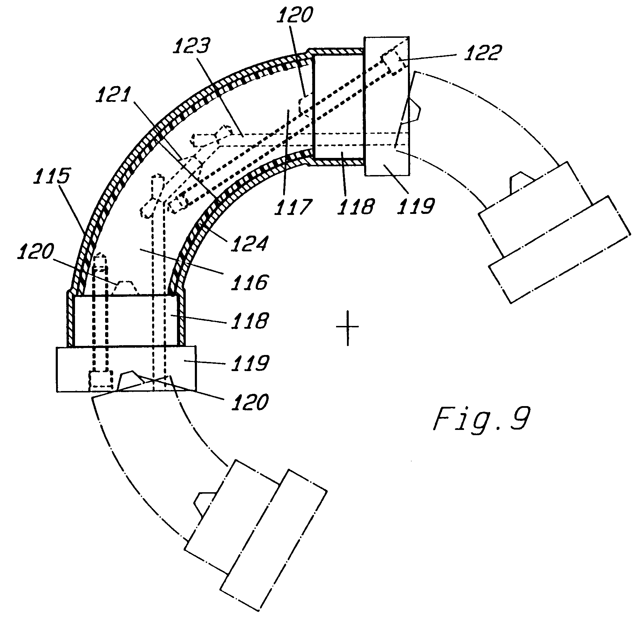

Das beschriebene Verfahren eignet sich auch für einfachere Fittings, z.B. den in Fig. 9 dargestellten Rohrbogen 115. Hier besteht der Kern aus zwei Kernteilen 116, 117, an die je ein zylindrischer Ansatz 118 zur Bildung der Klebemuffen mit einem Einspannabschnitt 119 zum Ergreifen mittels des Roboters angeschraubt ist. Die beiden Kernteile 116, 117 haben an ihren torusähnlichen Abschnitten einen sich gegen das freie Ende hin leicht verjüngenden Querschnitt. Dadurch wird das Entformen erleichtert. Sie sind aneinander mittels zweier Zentrierkonen 120, welche in konische Ansenkungen 121 eingreifen, zentriert und können durch Schrauben 122 aufeinander festgespannt werden. Die beiden Ansätze 118 sind mit weiteren Schrauben 122 an den Kernteilen 116, 117 befestigt und durch je mindestens einen weiteren Zentrierkonus 120 gegenüber den Kernteilen 116, 117 zentriert. Die Kernteile 116, 117 werden von einem viertelskreisbogenförmigen Silikongummischlauch 124 umhüllt, der sich wiederum nur zwischen den Ansätzen 118 erstreckt und das Entformen der Kernteile 116, 117 erleichtert. Um das Entformen zusätzlich zu erleichtern, haben die Kernteile 116, 117 Bohrungen 123 zum Anschluss von Druckluft. Der Rohrbogen 115 wird in analoger Weise aufgebaut wie der zuvor beschriebene T-Fitting 105, nur dass hier zwischen den einzelnen Wicklungslagen keine Spickel aufgelegt werden.

## Patentansprüche

1. Verfahren zur Herstellung eines verbindungsteils aus faserrarmiertem Kunststoff zur Verbindung von Hohlprofilen, umfasend folgende Schritte:
a) um wenigstens einen Teil eines Kerns (11) wird ein Innengelcoat (33) aufgebracht und ausgehärtet;
b) der Kern (11) wird an einem um mindestens zwei Achsen (A₄, A₅) schwenkbaren und in mindestens zwei Richtungen verschiebbaren Kopf (39) einer programmgesteuerten Maschine (40) befestigt;
c) ein Faserband (46) wird mit flüssigem Kunstharz getränkt;
d) der Kern (11) wird mit dem Innengelcoat (33) an eine Austrrittskante (72) für das Faserband (46) einer Wickelstation (38) geführt und flüssiges Kunstharz des Faserbandes (46) punktförmig ausgehärtet, um den Faserbandanfang an den Innengelcoat (33) anzuheften;
e) das Faserband (46) wird überlappend in mehreren Schichten um den Kern (11) gewickelt;
f) am Ende des Wickelvorganges wird der Kern (11) an die Austrittskante (72) geführt und das Faserband (46) benachbart dieser Kante (72) abgeschnitten;
g) Der Kunststoff des gewickelten Faserbandes (46) wird ausgehärtet; und
h) der Kern (11) wird aus dem Verbindungsteil entfernt.

2. Verfahren nach Anspruch 1 zur Herstellung eines Abzweig-Verbindungsteils, wobei zwischen den Schichten des Faserbandes (46) an den Abzweigstellen des Verbindungsteils Spickel (89) aus Fasermatten aufgelegt werden.

3. Vorrichtung zum Herstellen eines Verbindungsteils aus faserarmiertem Kunststoff zur Verbindung von Hohlprofilen, umfassend eine programmgesteuerte Maschine (40) mit einem um mindestens zwei Achsen (A₄, A₅) schwenkbaren und in mindestens zwei Richtungen verschiebbaren Kopf (39) zum Halten und Schwenken eines Kerns (11) sowie eine Wickelstation (38) mit einem um eine Achse (42) drehbaren Haspel (41) enthaltend eine Vorratsrolle (45) von Faserband (46), das über eine Tränkeinrichtung (52) zum Tränken des Faserbandes (46) mit flüssigem Kunststoff zu einer Austrittskante (72) an einem Arm (70) des Haspels (41) geführt ist, einem Antriebsmotor (43) zum Drehen des Haspels (41), einer Schneideinrichtung (78-81) an der Austrittskante (72) zum Abschneiden des Faserbandes (46), und mit Mitteln (82) zum punktförmigen Aushärten des im Faserband (46) enthaltenen flüssigen Kunstharzes.

4. Vorrichtung nach Anspruch 3, wobei neben der Wickelstation (38) eine Spickelauflegestelle (88) angeordnet ist zum Auftragen von Spickeln (89) aus Fasermatte zwischen aufeinanderfolgenden Wicklungen von Faserband (46) auf die beim wickeln freibleibenden Stellen.

## Claims

1. Process for producing a connector fitting of fibre-reinforced plastic for the connection of hollow profiles, comprising the following steps:
a) an inner gel coat (33) is applied to at least part of a core (11) and is cured;
b) the core (11) is fastened on a head (39) of a program-controlled machine (40), which head can be swivelled about at least two axes (A₄, A₅) and can be displaced in at least two directions;
c) a roving (46) is impregnated with liquid synthetic resin;
d) the core (11) is guided with the inner gel coat (33) up to an outlet edge (72) for the roving (46) of a winding station (38) and liquid synthetic resin of the roving (46) is cured in a punctiform manner in order to attach the beginning of the roving onto the inner gel coat (33);
e) the roving (46) is wound in an overlapping manner around the core (11) in a plurality of layers;
f) at the end of the winding operation, the core (11) is guided up to the outlet edge (72) and the roving (46) is cut off alongside this edge (72);
g) the plastic of the wound roving (46) is cured; and
h) the core (11) is removed out of the connector fitting.

2. Process according to Claim 1 for producing a branch connector fitting, gussets (89) of fibre mats being laid between the layers of the roving (46) at the branch points of the connector fitting.

3. Apparatus for producing a connector fitting from fibre-reinforced plastic for the connection of hollow profiles, comprising a program-controlled machine (40) having a head (39) which can be swivelled about at least two axes (A₄, A₅) and can be displaced in at least two directions, for holding and swivelling a core (11), and also a winding station (38) having a reel (41), which can be rotated about an axis (42) and contains a supply roll (45) of roving (46), which is passed via an impregnating device (52) for impregnating the roving (46) with liquid plastic to an outlet edge (72) on an arm (70) of the reel (41), having a drive motor (43) for rotating the reel (41), having a cutting device (78-81) at the outlet edge (72) for cutting off the roving (46), and having means (82) for the punctiform curing of the liquid synthetic resin contained in the roving (46).

4. Apparatus according to Claim 3, there being arranged in addition to the winding station (38) a gusset laying location (88) for applying gussets (89) of fibre mat between successive windings of roving (46) onto the places remaining exposed during winding.

## Revendications

1. Procédé pour la fabrication d'un raccord en matière plastique renforcée par fibres pour le raccordement de profils creux, comprenant les étapes suivantes :
a) une couche de gel intérieure (33) est appliquée et durcie autour d'au moins une partie d'un noyau (11) ;
b) le noyau (11) est fixé sur une tête (39) d'une machine commandée par programme (40), cette tête étant propre à effectuer un mouvement rotatif autour d'au moins deux axes (A₄, A₅) et un mouvement de translation suivant au moins deux directions ;
c) un ruban de fibres (46) est imprégné de résine synthétique liquide ;
d) le noyau (11) est amené, avec la couche de gel intérieure (33), au niveau d'un bord de sortie (72), pour la bande de fibres (46), d'un poste d'enroulement (38) et la résine synthétique liquide de la bande de fibres (46) est durcie ponctuellement, pour faire adhérer le début de la bande de fibres sur la couche de gel intérieure (33) ;
e) la bande de fibres (46) est enroulée à recouvrement en plusieurs couches autour du noyau (11) ;
f) à la fin de l'opération d'enroulement, le noyau (11) est amené au niveau du bord de sortie (72) et la bande de fibres (46) est sélectionnée à proximité de ce bord (72) ;
g) la matière plastique de la bande de fibres enroulée (46) est durcie ; et
h) le noyau (11) est retiré du raccord.

2. Procédé selon la revendication 1 pour la fabrication d'un raccord en T, dans lequel sont posés des renforts (89) en mat de fibres, entre les couches de la bande de fibres (46) au niveau des points d'embranchement du raccord.

3. Dispositif pour la fabrication d'un raccord en matière plastique renforcée par fibres pour le raccordement de profils creux, comprenant une machine commandée par programme (40) avec une tête (39), propre à effectuer un mouvement rotatif autour d'au moins deux axes (A₄, A₅) et un mouvement de translation suivant au moins deux directions, pour maintenir et faire pivoter un noyau (11), ainsi qu'un poste d'enroulement (38) avec un dévidoir (41) propre à tourner autour d'un axe (42) et contenant un rouleau d'alimentation (45) de bande de fibres (46), qui est amenée, en passant par un dispositif d'imprégnation (52) pour imprégner la bande de fibres (46) d'une matière plastique liquide, à un bord de sortie (72) sur un bras (70) du dévidoir (41), avec un moteur de commande (43) pour faire tourner le dévidoir (41), un dispositif de sectionnement (78 à 81) au niveau du bord de sortie (72) pour sectionner la bande de fibres (46), et avec des moyens (82) pour le durcissement ponctuel de la résine synthétique liquide contenue dans la bande de fibres (46).

4. Dispositif selon la revendication 3, dans lequel est disposé, à côté du poste d'enroulement (38) un emplacement de pose de renforts (88) pour appliquer des renforts (89) en mat de fibres entre des enroulements successifs de bande de fibres (46) sur les emplacements restant libres lors de l'enroulement.
